# EUROPÄISCHE PATENTANMELDUNG

(11) **EP 0 658 372 A2**
(43) Veröffentlichungstag der Anmeldung: **21.06.1995**
(21) Anmeldenummer: 94115603.6
(22) Anmeldetag: 04.10.1994
(51) Int. Cl.: B01D 63/08, B01D 53/22, B01D 11/04

(54) **Vorrichtung und Verfahren zur Entfernung von gasförmigen Stoffen aus einem Gasstrom (Flüssigkeitsstrom)**

(30) Priorität: 13.12.1993 DE 4342485
(71) Anmelder: W.L. GORE & ASSOCIATES, D-85640 Putzbrunn (DE)
(72) Erfinder: Kramer, Valentin, D-83620 Feldkirchen/Westerham (DE)
(74) Vertreter: Klunker . Schmitt-Nilson . Hirsch

(57) **Zusammenfassung**

Bei einer Vorrichtung und einem Verfahren zur Entfernung von gasförmigen Stoffen aus einem Gasstrom (Flüssigkeitsstrom) ist ein Membranmodul vorgesehen, welches im wesentlichen flächige Membrantaschen aus einem flüssigkeitsdichten Material aufweist, die parallel zueinander und parallel zur Strömungsrichtung des Gasstromes angeordnet und zur Aufnahme einer Suspension von Mikroorganismen oder dergleichen eingerichtet sowie über einen Zulauf beschickbar und über einen Ablauf entleerbar sind. Für eine jede Membrantasche (11) des Membranmoduls (20) ist ein plattenförmiges Trägerteil (1) vorgesehen, an dessen eine Oberfläche (8) angrenzend jeweils eine Membrantasche (11) angeordnet und mit dieser Oberfläche (8) randseitig abdichtend verbunden ist. Auf einer gegenüberliegenden Oberfläche (16) des Trägerteils (1) ist eine Reihe von Durchströmungskanälen (12) für Gasstrom ausgebildet, deren Begrenzungswände durch parallele Rippen (5) gebildet sind, die in einem mittleren Bereich (B) des Trägerteils (1) ausgeformt sind, wobei in den an den Bereich (B) der Rippen (5) abgrenzenden beiden Seitenbereichen (A, B) des Trägerteiles (1) jeweils Zulauf- und Ablaufbohrungen (6) für die Membrantaschen ausgeformt sind. Die Trägerteile (1) sind in dem Membranmodul (20) in der Weise übereinandergestapelt, daß sich jeweils eine Membran (9) der Membrantaschen (11) auf den freien Kanten der Rippen (5) an einem jeweils benachbarten Trägerteil (1) abstützt und hierbei die offenen Seiten sämtlicher Durchströmungskanäle (12) abdeckt, während die in jedem Trägerteil (1) ausgesparten Zulauf- und Ablaufbohrungen (6) fluchtend übereinanderliegen und entsprechende Kanäle bilden, die durch den Stapel der Trägerteile (1) vollständig hindurchgehen.

## Beschreibung

Die Erfindung betrifft eine Vorrichtung zur Entfernung von gasförmigen Stoffen aus einem Gasstrom (Flüssigkeitsstrom), mit den weiteren Merkmalen, wie diese im Oberbegriff des Patentanspruches 1 definiert sind. Ferner betrifft die Erfindung ein Verfahren zur Entfernung von gasförmigen Stoffen aus einem Gasstrom (Flüssigkeitsstrom).

Aus DE 40 27 126 C1 ist bereits eine Vorrichtung zur Entfernung von gasförmigen Stoffen aus einem gasförmigen Medium durch Mikroorganismen bekannt, wobei die dortigen Membranmodule im wesentlichen aus einem kastenförmigen Gehäuse bestehen, in welchem eine Vielzahl von flächigen Membrantaschen aus einem gasdurchlässigen flüssigkeitsdichten Material angeordnet ist, wobei die Außenmaße dieser Membrantaschen den Innenmaßen des Gehäuses entsprechen. Zwischen den aufeinanderfolgend angeordneten Membrantaschen sind entlang der seitlichen Kanten stabförmige Abstandselemente vorgesehen, die einen bestimmten Abstand zwischen den Membrantaschen definieren. Das Membranmaterial kann zusätzlich Erhöhungen oder Verstärkungen aufweisen, so daß ein bestimmter Abstand zwischen zwei Membrantaschen über die gesamte Fläche sichergestellt ist. Jede der einzelnen Membrantaschen ist mit einer Zuleitung und einer Ableitung versehen, die in eine gemeinsame Versorgungs- bzw. Entsorgungsleitung münden. Das verwendete Membranmaterial ist gasdurchlässig und flüssigkeitsdicht, vorzugsweise wird eine Polyurethanfolie eingesetzt.

Werden solche bekannten Membranmodule beispielsweise zur Abgasreinigung verwendet, dann sich ganz erhebliche Membranflächen erforderlich. Um ein solches Verfahren wirtschaftlich einsetzen zu können, muß der Herstellungsaufwand minimiert werden. Das Anschließen der für jede Tasche separaten Zu- und Ableitungen an eine gemeinsame Versorgungs- und Entsorgungsleitung ist zeitaufwendig, kompliziert und störungsanfällig. Als weiteren Nachteil muß die Tatsache angesehen werden, daß sich die Membrantaschen unter dem Gewicht der in den Taschen befindlichen Flüssigkeit einseitig auswölben und dadurch den freien Strömungsquerschnitt für den Gasdurchtritt verringern. Eine exakte Berechnung des Strömungswiderstands ist unter diesen Umständen nur schwer möglich, da er sich zeitabhängig ändert.

Sind die Seitenflächen der Membrantaschen mit Erhöhungen versehen, dann verteuert sich die Herstellung der Membrane und Wirkungsgrad des Stoffaustauschs durch die Membrane hindurch wird herabgesetzt.

Da die Membrantaschen lediglich seitlich gehalten sind, kann es vorkommen, daß die flexible Vorderkante unter dem Staudruck des Gasstroms hochklappt und benachbarte, für den Gasdurchtritt vorgesehene Zwischenräume verschließt.

In der nicht vorveröffentlichten deutschen Patentanmeldung P 43 03 936.7 (AT: 10.02.93) wird ferner ein Membranmodul beschrieben, welches aus einer Vielzahl von flächigen, parallel zueinander und parallel zur Strömungsrichtung des Gasstroms angeordneten Membrantaschen besteht, von denen eine jede einen flachen, umlaufenden Rahmen aufweist, der auf beiden Seiten dichtend mit dem Membranmaterial bespannt ist und senkrecht zu seiner Rahmenebene wenigstens eine Zulaufbohrung und wenigstens eine Ablaufbohrung aufweist, welche die Membrane durchsetzen und zwischen den Membranen durch eine weitere Bohrung oder eine Nut mit dem Raum verbunden sind, der von den Membranen und dem Rahmen umschlossen ist, wobei darüber hinaus mehrere Membrantaschen derart übereinandergestapelt sind, daß die Zulaufbohrungen und die Ablaufbohrungen jeweils übereinander liegen und durchgehende Kanäle bilden. In einem solchen durch aufeinanderfolgend angeordnete Membrantaschen gebildeten Stapel sind die jeweils zwischen den Membrantaschen seitlich angeordneten Abstandshalter als Dichtungen ausgebildet, die Bohrungen aufweisen, welche hinsichtlich Größe und Anordnung mit den Zulauf- und Ablaufbohrungen in dem Rahmen der Membrantaschen übereinstimmen, ferner sind in den jeweiligen Zwischenräumen zwischen den aufeinanderfolgenden Membrantaschen jeweils Stützstrukturen angeordnet, welche den Abstand zwischen den einzelnen Membrantaschen über die gesamte Fläche einer Tasche definieren und beispielsweise durch eine steife Folie mit Zickzack-Profil oder durch eine offenporige Struktur aus biegesteifen Fasern oder Draht gebildet sind.

Ein derartiges, in der vorgenannten Patentanmeldung beschriebenes Membranmodul erfordert die Fertigstellung verschiedener Einzelteile, insbesondere Rahmen, Stützstrukturen und Abstandshalter, welche zur Bildung des resultierenden Membranmoduls zusammengefügt und gegenseitig einjustiert werden müssen.

Hierdurch wird insbesondere ein verhältnismäßig hoher Fertigungsaufwand bedingt.

Der vorliegenden Erfindung liegt die Aufgabe zugrunde, eine verbesserte Vorrichtung der eingangs definierten Art anzugeben, wobei hierfür einfach aufgebaute Membranmodule geschaffen werden sollen, die sich sehr wirtschaftlich fertigen lassen und so konstruiert sind, daß sie auch über länger andauernde Betriebszeiten hinweg bei verbessertem Wirkungsgrad definierte Stoffaustauschverhältnisse bieten.

Diese Aufgabe wird gemäß der Erfindung durch die im kennzeichnenden Teil des Patentanspruchs 1 angegebenen Merkmale gelöst.

Als Kerngedanke der vorliegenden Erfindung wird es angesehen, für jede Membrantasche des Membranmoduls ein im wesentlichen plattenartig ausgebildetes, vorgefertigtes Trägerteil vorzusehen, an dessen eine Seite bzw. untere Oberfläche angrenzend jeweils eine Membrantasche mit Flüssigkeitszulauf- und Ablauföffnungen angeordnet und mit dieser Seite bzw. Oberfläche randseitig abdichtend verbunden ist, während zumindest auf der gegenüberliegenden Seite bzw. oberen Oberfläche des Trägerteils eine Reihe von nebeneinander angeordneten, parallelen Durchströmungskanälen für Gasstrom (Flüssigkeitsstrom) ausgebildet ist, deren Begrenzungswände durch auf dieser Seite bzw. oberen Oberfläche des Trägerteils angeformte, parallele Rippen als Abstandselemente gebildet sind; hierbei sind außerdem in den beiden seitlichen Bereichen des Trägerteils, welche jeweils an den die Rippen enthaltenden Bereich des Trägerteils angrenzen, jeweils die für alle Membrantaschen gemeinsamen Zulauf- und Ablaufbohrungen ausgeformt und die Trägerteile sind in der Weise übereinandergestapelt, daß jeweils wenigstens eine Membran der Membrantaschen sich auf den freien Kanten der Rippen an einem benachbart angeordneten Trägerteil abstützt und hierbei die offenen Seiten sämtlicher Durchströmungskanäle abdekt; schließlich ist noch vorgesehen, daß die in jedem Trägerteil ausgesparten Zulauf- und Ablaufbohrungen fluchtend übereinanderliegen und entsprechende Kanäle bilden, die durch den Stapel der Trägerteile vollständig hindurchgehen.

Vorteilhafte weitere Ausgestaltungen dieser erfindungsgemäßen Vorrichtung ergeben sich aus den Unteransprüchen.

So kann mit besonderem Vorteil beispielsweise eine jede Membrantasche einerseits durch eine Membran und andererseits durch eine untere, ebene Oberfläche des Trägerteils begrenzt sein, an welchem diese Membran randseitig befestigt ist.

Vorzugsweise können hierbei die jeweiligen randseitigen Befestigungsabschnitte der Membran an der unteren Oberfläche des Trägerteils einmal vor der Position einer Zulauföffnung und zum anderen hinter der Position einer Ablauföffnung angeordnet sein.

Gemäß einer abgewandelten Weiterbildung der vorliegenden Erfindung kann auch vorgesehen sein, daß eine jede Membrantasche einerseits durch eine erste Membran und andererseits durch eine zweite Membran begrenzt ist, wobei diese ersten und zweiten Membranen jeweils randseitig einem unteren, ebenen Oberflächenbereich des Trägerteils befestigt sind.

Insbesondere können bei dieser Ausführungsform die randseitigen Befestigungsabschnitte der ersten Membranen im unteren Oberflächenbereich der Wandung des Trägerteils jeweils vor einer Zulauföffnung bzw. hinter einer Ablauföffnung der Membrantasche angeordnet sein, während die randseitigen Befestigungsabschnitte der zweiten Membrane im unteren Oberflächenbereich der Wandung des Trägerteils jeweils hinter der Zulauföffnung bzw. vor der Ablauföffnung der Membrantasche angeordnet sein können.

Gemäß einer weiteren vorteilhaften Abwandlung des erfindungsgemäßen Membranmoduls kann in dem die Rippen aufweisenden Bereich des Trägerteils ein System aus im wesentlichen zueinander parallelen Doppelrippen vorgesehen sein, wobei von einem in diesem Bereich vorhandenen plattenartigen Mittelteil des Trägerteils ausgehend die ersten und zweiten Rippen in zwei zueinander entgegengesetzten Richtungen, d.h. einerseits in der Richtung nach oben und andererseits in der Richtung nach unten jeweils gleichförmig abstehend ausgebildet sind.

Im Falle der zuletzt erläuterten Ausgestaltung der Erfindung wird jeweils die erste Membrane einer Membrantasche durch die Reihe der nach oben abstehenden, ersten Rippen abgestützt und deckt hierbei eine entsprechende Gruppe von ersten Durchströmungskanälen ab, während die jeweils zweite Membrane der Membrantasche durch eine entsprechende Reihe der nach unten abstehenden, zweiten Rippen abgestützt wird und hierbei eine entsprechende zweite Gruppe von zweiten Durchströmungskanälen abdeckt.

Wie bereits oben erwähnt, wird zur Bildung eines resultierenden Membranmoduls jeweils eine vorgegebene Anzahl der plattenartig ausgebildeten, vorgefertigten Trägerteile aufeinandergestapelt. Um eine sichere gegenseitige Befestigung der aufeinandergestapelten Trägerteile zu gewährleisten, kann gemäß weiterer vorteilhafter Ausgestaltung der Erfindung vorgesehen sein, daß ein jedes Trägerteil auf seiner oberen Wand eine vorgegebene Anzahl von noppenartigen Vorsprüngen und auf seiner unteren Wand eine vorgebene Anzahl von komplementären Ausnehmungen aufweist, derart, daß in dem durch die aufeinandergestapelten Trägerteile gebildeten Stapel die noppenartigen Vorsprünge in die entsprechenden Ausnehmungen einsteckbar sind.

In bevorzugter Weise können diese noppenartigen Vorsprünge und die komplementären Ausnehmungen in den jeweiligen randseitigen verstärkten Wandungsabschnitten der Trägerteile vorgesehen sein.

Im Falle der zuletzt erläuterten Ausführungsform der Erfindung ergibt sich eine Art von Baukastensystem, welches mit den erfindungsgemäß ausgebildeten, vorgefertigten Trägerteilen bestückt ist, die sich beim Aufeinanderstapeln mit Hilfe der erläuterten Steckverbindungsmittel (noppenartige Vorsprünge einerseits, komplementäre Ausnehmungen andererseits), praktisch selbsttätig gegenseitig fixieren.

Hierdurch ist eine außerordentlich gute mechanische Stabilität des resultierenden Membranmodules gewährleistet.

Darüber hinaus kann im Rahmen der vorliegenden Erfindung noch vorgesehen sein, daß die freien Kanten der Rippen mit Kerben versehen sind, die in der Längsrichtung der Rippen mit regelmäßigen gegenseitigen Abständen voneinander angeordnet sind. Mit Hilfe derartiger Kerben läßt sich erreichen, daß es zu einer Art von Verwirbelung des durch die Strömungskanäle hindurchgeleiteten, zu reinigenden Gasstromes (bzw. Flüssigkeitsstromes) im Bereich der Rippenoberflächen kommt, was andererseits wiederum zu einer Erhöhung der Verweilzeit des Gasstromes rm Bereich der Membranoberflächen der Membrantaschen führt, die sich auf den freien Kanten dieser Rippen abstützen. Eine Erhöhung der Verweilzeit des zu reinigenden Gases im Bereich der Membranoberflächen hat wiederum den Vorteil, daß der Wirkungsgrad des Stoffaustausches "gasförmig/flüssig" noch verstärkt werden kann.

Ein entsprechender Verwirbelungseffekt könnte aber auch dadurch erzielt oder noch erhöht werden, daß die für die Bildung der Membrantaschen verwendete Membrane mit einem Laminat verbunden wird, welches vorzugsweise aus einem rauhen Vlies besteht, so daß die Oberfläche dieses Vlieses unmittelbar auf die freien Kanten der Rippen zur Auflage gelangt.

In jedem Fall sind die Trägerteile für die Membrantaschen des erfindungsgemäßen Membranmoduls in bevorzugter Weise durch einstückige Kunststoff-Spritzgußteile gebildet, welche sich verhältnismäßig kostengünstig mittels an sich bekannter Spritzgußverfahren fertigen lassen.

Das in vorgegebenen Bereichen des Trägerteils angeformte Rippensystem erfüllt die Funktion sowohl von Abstandselementen als auch von Stützstrukturen, d.h. es sind hierfür eine gesonderten Bauelemente mehr erforderlich.

Die durch die Rippen jeweils seitlich begrenzten Durchströmungskanäle für den Gasstrom (bzw. Flüssigkeitsstrom) sind so ausgebildet, daß ein mindestens 60 bis 70 % freier Gasdurchsatz (bzw. Flüssigkeitsdurchsatz) ermöglicht ist, wobei gleichzeitig das Membranmaterial der Membrantaschen durch diese Rippen in außerordentlich guter Weise abgestützt wird. Darüber hinaus ist aufgrund dieser Konstruktionsweise das Membranmaterial der Membrantaschen durch die Rippen außerordentlich gut fixiert, wodurch die resultierende Stabilität und Haltbarkeit der erfindungsgemäßen Membranmodule im Vergleich mit bekannten Ausführungen wesentlich verbessert werden können.

Im übrigen hängt der Wirkungsgrad des Stoffaustausches in derartigen Modulen, neben der Konstruktion der Module, die sich in allererster Linie auf die Strömungsverhältnisse auswirkt, auch von der Eignung der eingesetzten Membran ab. Neben der bereits erwähnten Polyurethanfolie ist es aus der Mikrobiologie bekannt, Zellkulturen in Membrantaschen zu züchten, die lutfdurchlässig und flüssigkeitsdicht sind. Als Material für diese Membranen wurde Polyethylen und Polypropylen vorgeschlagen (US-A-3 184 395), Ethylen-Propylen-Copolymer (US-A-3 941 662) oder auch Silikongummi (WO 90/10690). Alle diese Membranen haben die Eigenschaft, daß sie gasdurchlässig sind, d.h. daß sie jedenfalls Sauerstoffmoleküle passieren lassen. Es wurde auch bereits vorgeschlagen, eine mikroporöse, gereckte PTFE-Membran einzusetzen, wie sie unter dem Handelsnamen GORE-TEX (eingetragenes Warenzeichen der W.L. Gore & Associates) auf dem Markt erhältlich sind. Wegen ihrer Eigenschaft, Wasserdampf und Luft durchzulassen, Wasser aber zurückzuhalten, werden derartige Membranen im großen Maßstab bei der Herstellung von Sportkleidung verarbeitet. Die Herstellung derartiger Membranen ist in den US-Patentschriften 3 953 556 und 4 187 390 beschrieben.

Obwohl Membranmodule, die mit einer PTFE-Membran ausgerüstet sind, sich ganz allgemein als Reaktoren für das Stoffaustauschsystem "gasförmig/flüssig" eignen, hat sich gezeigt, daß bei der Abgasreinigung mit Hilfe von Mikroorganismen den Mikroorganismen durch die mikroporöse Membranstruktur zuviel Sauerstoff zugeführt wird. Diese Sauerstoffzufuhr beschleunigt das Wachstum bzw. die Vermehrung der Mikroorganismen in solchem Maße, daß in kurzer Zeit eine Verstopfung der Membrantaschen zu beobachten ist. Der Strömungswiderstand der Membrantaschen wird dann so hoch, daß mit Druckdifferenzen gearbeitet werden müßte, denen die Membrantaschen mechanisch nicht standhalten können. Es bestand daher ein Bedürfnis für eine Membran, die in erster Linie für die Abgasreinigung mit Hilfe von Mikroorganismen eingesetzt werden kann. In der nicht vorveröffentlichten deutschen Patentanmeldung P 43 26 677.0 (AT: 09.08.93) ist beschrieben, daß sich eine mikroporöse gereckte PTFE-Membran als geeignet erwiesen hat, die eine flächendeckende, kontinuierliche Beschichtung aus einem hydrophilen Material aufweist. Das hydrophile Material muß eine Wasserdampfdurchlässigkeit von wenigstens 1000 g pro Quadratmeter und Tag aufweisen. Solche Eigenschaften hat beispielsweise Polyurethan, das als Beschichtung in einer Menge von 1 bis 15 g pro Quadratmeter auf die PTFE-Folie aufgebracht werden kann. Die hydrophile Schicht kann aber auch ein Polyether-Polyurethan oder eine Membran aus Perfluorsulfonsäure sein. Die Materialkombinationen entsprechen denen, die auch in der Bekleidungsindustrie eingesetzt werden. So ist in der US-A 4 194 041 ein zweischichtiges Laminat aus einer mikroporösen PTFE-Schicht und einer hydrophilen Schicht beschrieben, das im Rahmen dieser Erfindung ebenfalls eingesetzt werden kann. Auf den Offenbarungsgehalt dieser Patentschrift wird ausdrücklich Bezug genommen.

Da der Wirkungsgrad des Stoffaustausches direkt von der Dicke der Membran abhängt, werden häufig Membranen verwendet, die so dünn sind, daß sie schlechte mechanische Eigenschaften haben, beispielsweise leicht einreißen. Um dies zu verhindern, werden die Membranen vorzugsweise mit einem luftdurchlässigen Trägermaterial verbunden, das vorzugsweise ein Vlies, eine Lochfolie oder ein textiles Material sein kann. Wenn das Schichtmaterial zu einer Membrantasche verarbeitet wird, muß darauf geachtet werden, daß das Trägermaterial nicht auf der Innenseite der Membrantasche, also auf der Flüssigkeitsseite zu liegen kommt, da die Mikroorganismen in die poröse Struktur des Trägermaterials eindringen und dessen Poren verstopfen. Bei Membranen, die mit einem Trägermaterial laminiert sind, muß also dieses Trägermaterial an der Außenseite der Membrantasche angeordnet sein, d.h. der Seite, die mit dem Gasstrom beaufschlagt wird.

Um die Schwierigkeiten der Handhabung einer unsymmetrischen Bahn zu vermeiden, kann auch eine symmetrisch aufgebaute Membran verwendet werden, in diesem Fall wird das Trägermaterial zwischen zwei mikroporösen PTFE-Folien eingeschlossen, die jeweils mit einem hydrophilen Material, vorzugsweise Polyurethan beschichtet sind. Die Vorteile dieses symmetrischen Membranaufbaues werden bis zu einem gewissen Grad durch ihren geringeren Wirkungsgrad aufgewogen.

Die PTFE-Folie und die hydrophile Beschichtung haben vorzugsweise die gleiche Dicke, die im Bereich von jeweils 0,005 bis 1,5 mm liegt. Vorzugsweise betragen die Dicken 0,02 bis 0,1 mm.

Es hat sich gezeigt, daß die in der beschriebenen Weise beschichtete PTFE-Membran besonders vorteilhaft zur Entfernung von Noₓ -Molekülen aus Abgasen eingesetzt werden kann. Es wird vermutet, daß die Membran in diesem Fall als eine Diffusionsmembran wirkt, da durch die Beschichtung der mikroporöse Charakter der PTFE-Membran verlorengeht, d.h. es findet keine Durchströmung der Membran mehr statt. Die hydrophile Beschichtung, die vorzugsweise auf der Seite der flüssigen Reaktionsmischung angeordnet sein sollte, gewährleistet eine gewisse Wasseraufnahme. Durch diese Quellung wird der beabsichtigte Stoffaustausch vermutlich ebenfalls begünstigt.

Die vorliegende Erfindung wird nun im Nachfolgenden im Rahmen von Ausführungsbeispielen näher erläutert, wobei auf die beigefügten Zeichnungen Bezug genommen wird. Dabei zeigen:
- **Fig. 1**: schematisch eine Teilansicht, teilweise im Schnitt, eines Trägerteils für eine Membrantasche,
- **Fig. 2**: eine Teilansicht eines Membranmoduls im Schnitt, welches durch eine Anzahl von aufeinandergestapelten Trägerteilen gemäß Fig. 1 gebildet ist,
- **Fig. 3**: eine schematische perspektivische Teilansicht einer Trägerplatte gemäß Fig. 1,
- **Fig. 4**: eine schematische Teil-Schnittansicht durch eine weitere Ausführungsform eines Membranmoduls, welches durch aufeinandergestapelte Trägerteile gemäß einer abgewandelten Ausführungsform gebildet ist,
- **Fig. 5**: eine weitere schematische Teil-Schnittansicht des Membranmoduls gemäß Fig. 4,
- **Fig. 6**: eine weitere schematische, perspektivische Teilansicht einer Trägerplatte gemäß einer weiteren Ausführungsform,
- **Fig. 7**: schematische Teil-Schnittansichten durch jeweilige randseitige verstärkte Wandungsabschnitte von aufeinanderzustapelnden Trägerteilen in der Ausführungsform nach Fig. 6, wobei die Schnittansichten gemäß den Pfeilen A-B nach Fig. 6 dargestellt sind; und
- **Fig. 8**: eine weitere schematische perspektivische Teilansicht einer Trägerplatte gemäß einer weiteren Ausführungsform der Erfindung.

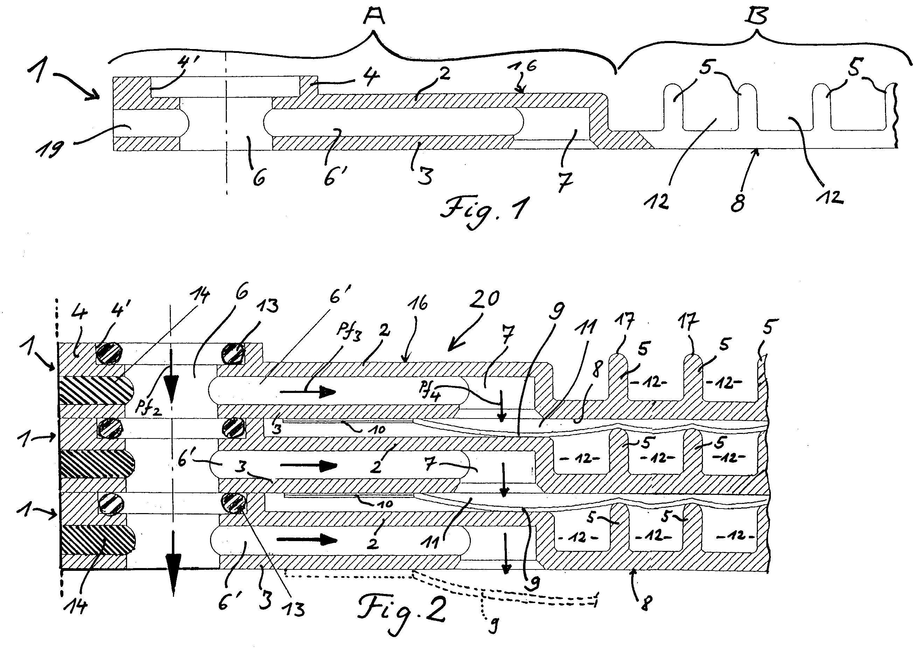

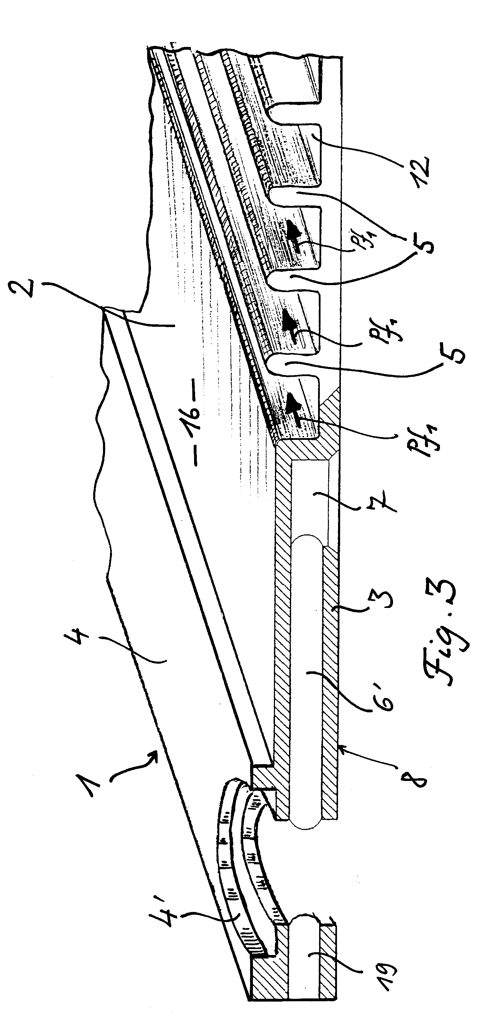

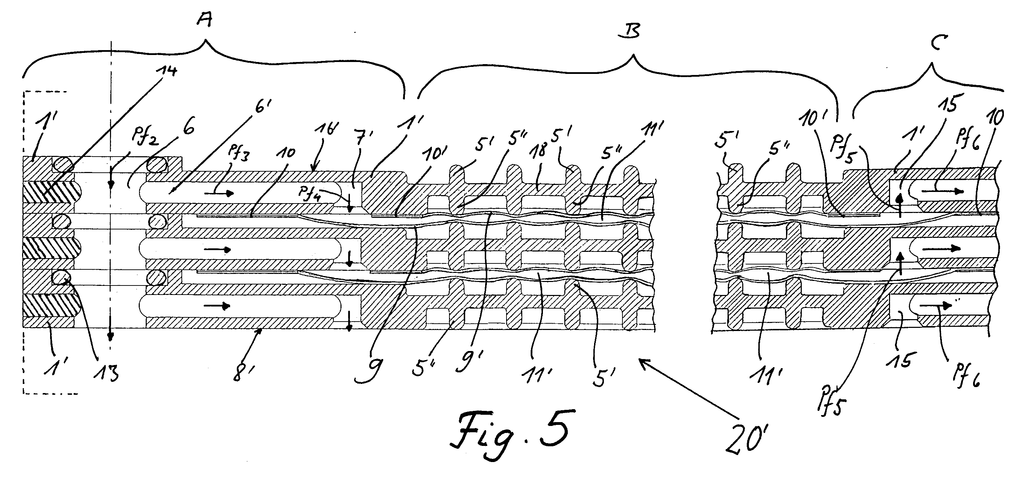

Wie insbesondere aus den Figuren 1 und 3 ersichtlich ist, besteht ein Trägerteil 1 für eine Membrantasche im wesentlichen aus einem (in den Figuren nur teilweise dargestellten) plattenförmigen Element, das eine obere Wand 2 sowie eine untere Wand 3 aufweist, wobei sich diese untere Wand 3 über die Gesamtbreite des Trägerteils 1 erstreckt, während die obere Wand 2 jeweils in seitlichen Bereichen des Trägerteils 1 vorgesehen ist. Ein solcher seitlicher Bereich ist in Fig. 1 mit A bezeichnet, ein entsprechender seitlicher Plattenbereich ist auf der gegenüberliegenden, nicht dargestellten Seite des Tragerteils 1 im Anschluß an den Plattenbereich B vorgesehen (vgl. auch den in Fig. 5 mit C bezeichneten Teilabschnitt des dort dargestellten Trägerteils 1').

Wie sich ferner aus den Figuren 1 und 3 ersehen läßt, weist der obere Wandungsbereich 2 einen verstärkten randseitigen Wandungsabschnitt 4 auf, der sich praktisch über das Niveau der oberen Wandung 2 hinaus erstreckt und etwa die doppelte Wandstärke wie die obere Wandung 2 aufweist. Im Bereich dieses verstärkten Wandungsabschnitts 4 ist eine Ausnehmung 4' vorgesehen, die zur Aufnahme eines O-Ringes 13 dient (vgl. Fig. 2).

Im Bereich des Plattenabschnitts A sind darüber hinaus zwischen der oberen Wand 2 und der unteren Wand 3 verschiedene Ausnehmungen ausgeformt, wobei es sich insbesondere um eine Zulaufbohrung 6, einen inneren Flüssigkeitskanal 6', eine weitere Öffnung 7 sowie um eine randseitige Ausnehmung 19 handelt.

Wie weiter unten anhand der Fig. 2 noch erläutert wird, stehen die Zulaufbohrungen 6, der innere Flüssigkeitskanal 6' und die Öffnung 7 mit dem Innenraum einer Membrantasche 11 in Verbindung.

Eine untere Oberfläche der Wand 3 des Trägerteils 1 ist mit 8, eine obere Oberfläche der Wand 2 des Trägerteils 1 ist mit 16 bezeichnet.

In dem an den Plattenabschnitt A sich anschließenden Plattenabschnitt B des Trägerteils 1 befindet sich eine vorgegebene Anzahl von an dem Trägerteil 1 angeformten, parallelen Rippen 5, die sowohl als Abstandselemente dienen als auch die seitlichen Begrenzungswände für entsprechende, parallel nebeneinander verlaufende Durchströmungskanäle 12 bilden. Diese Durchströmungskanäle bilden die Kanäle zur Durchleitung des zu reinigenden Gasstroms (bzw. Flüsigkeitsstroms).

Die Strömungsrichtung dieses Gasstroms ist in Fig. 3 schematisch mit dem Pfeil Pf₁ bezeichnet. In den Figuren 1 und 2 ist diese Strömungsrichtung senkrecht zur Papierebene.

Wie sich insbesondere aus Fig. 2 ersehen läßt, werden zur Bildung eines Membranmoduls 20 mehrere der in den Fig. 1 und 3 dargestellten Trägerteile aufeinandergestapelt, derart, daß jeweils eine untere Wand 3 unmittelbar auf einen randseitigen Wandungsabschnitt 4 einer oberen Wand 2 der Trägerteile 1 zu liegen kommt.

In Fig. 2 sind lediglich drei Trägerteile 1 aufeinandergestapelt, in Wirklichkeit ist aber eine wesentlich größere Anzahl solcher Trägerelemente zur Bildung eines Membranmoduls 20 vorgesehen.

Aus Fig. 2 ist ferner ersichtlich, daß jeweils an eine untere Oberfläche 8 eines Trägerteils 1 angrenzend eine Membrantasche 11 angeordnet ist, die einerseits durch eine Membran 9 und andererseits im wesentlichen durch diese untere Oberfläche 8 des Trägerteils 1 begrenzt ist, wobei diese Membran 9 jeweils an ihren Rändern mit der unteren Oberfläche 8 des Trägerteils 1 befestigt ist, insbesondere mittels Aufkleben oder Anschweißen. Der jeweilige randseitige Befestigungsabschnitt zwischen einer Membran 9 und der unteren Oberfläche 8 eines Trägerteils 1 ist mit 10 bezeichnet. Hierbei ist insbesondere der jeweilige randseitige Befestigungsabschnitt 10 einer Membran 9 an der unteren Oberfläche 8 des Trägerteils 1 vor der Position der Zulauföffnung 7 angeordnet, während auf der gegenüberliegenden (nicht gezeigten) Seite des Trägerteils 1 der jeweilige randseitige Befestigungsabschnitt hinter der dortigen Position einer Ablauföffnung angeordnet ist.

Dies wird im einzelnen noch weiter unten anhand der Fig. 5 erläutert.

Aufgrund dieser Konstruktionsweise stehen die Zulaufbohrung 6, der innere Flüssigkeitskanal 6' und die Zulauföffnung 7 mit dem Innenraum der Membrantasche 11 in Verbindung, in entsprechender Weise steht die Membrantasche 11 auf der sich an den Bereich B anschließenden Seite des Trägerteils 1 über eine dortige Ablaufbohrung, und einen sich daran anschließenden inneren Flüssigkeitskanal mit der dortigen Ablaufbohrung in Verbindung, wie dies im einzelnen in den Zeichnungen nicht dargestellt ist. Bei dieser Konstruktionsweise wird eine jede Membrantasche 11 über die Zulaufbohrung 6, den inneren Flüssigkeitskanal 6', die Zulauföffnung 7 (vgl. die Strömungsrichtungen gemäß den Pfeilen Pf₂ , Pf₃ und Pf₄) mit Flüssigkeit beschickt, während andererseits der Ablauf der durch die Membrantasche 11 hindurchgehenden Flüssigkeit auf der rechten Seite in entsprechender Weise erfolgt.

Wie sich aus Fig. 2 ersehen läßt, sind die Trägerteile 1 in der Weise übereinandergestapelt, daß jeweils eine Membrane 9 der Membrantaschen 11 sich auf den freien Kanten 17 der Rippen 5 an einem benachbarten Trägerteil 1 abstützt und hierbei die offenen Seiten sämtlicher Durchströmungskanäle 12 abdeckt. Aufgrund einer solchen Konstruktionsweise wird erreicht, daß das Membranmaterial, d.h. also die Membran 9 einer Membrantasche 11, durch die oberen freien Kanten 17 der Rippen 5 stark fixiert wird, wobei beispielsweise zwischen einer Membran 9 und der unteren Oberfläche 8 des zugehörigen Trägerteils 1 ein Zwischenraum von ca. 0,05 mm bleibt. Dies ergibt jeweils eine relativ feste Fixierung der Membrane 9 in Bezug auf die untere Oberfläche 8 eines Trägerteils 1, fast schon in Form einer Festklemmung.

Wie bereits erwähnt, dienen die Rippen 5 nicht nur als Stützstruktur für die Membranen 9, sondern auch zur Bildung der Durchströmungskanäle 12 für den zu reinigenden Gasstrom (bzw. Flüssigkeitsstrom), wobei die Rippen 5 die Begrenzungswände dieser Durchströmungskanäle 12 bilden.

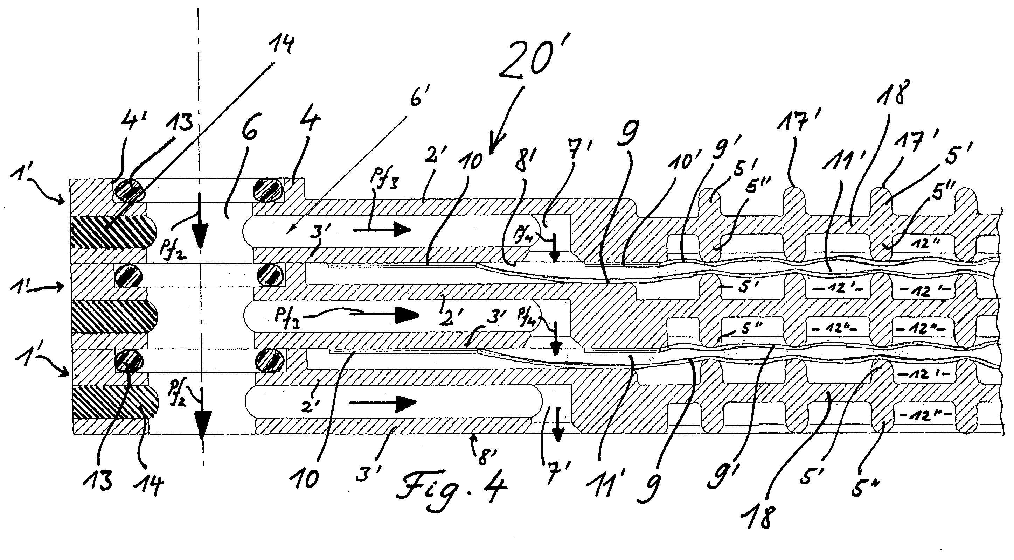

Gemäß einer abgewandelten Ausführungsform eines Membranmoduls 20', wie dieses in den Fig. 4 und 5 dargestellt ist, kann auch vorgesehen sein, daß jede Membrantasche 11' einerseits durch eine erste Membran 9 und andererseits durch eine zweite Membran 9' begrenzt ist, wobei diese ersten und zweiten Membranen 9 und 9' jeweils randseitig an einem unteren, ebenen Oberflächenbereich 8' eines zugehörigen Trägerteils 1' befestigt sind. Bei dieser Befestigungsweise sind insbesondere die randseitigen Befestigungsabschnitte 10 der ersten Membrane 9 im unteren Oberflächenbereich 8' der Wandung 3' des Trägerteils 1' jeweils vor einer Zulauföffnung 7' bzw. hinter einer Ablauföffnung 15 (vgl. Fig. 5) der Membrantasche 11' angeordnet. Andererseits sind die jeweiligen randseitigen Befestigungsabschnitte 10' der zweiten Membrane 9' im unteren Oberflächenbereich 8' der Wandung 3' des Trägerteils 1' hinter der Zulauföffnung 7' bzw. vor der Ablauföffnung 15 der Membrantasche 11' angeordnet.

Darüber hinaus ist bei der Ausführungsform gemäß den Fig. 4 und 5 in dem die Rippen aufweisenden Bereich B des Trägerteils 1' ein System aus im wesentlichen zueinander parallelen Doppelrippen 5' und 5'' vorgesehen, wobei von einem im Trägerteil-Bereich B vorhandenen, plattenartigen Mittelteil 18 des Trägerteils 1' ausgehend die ersten und zweiten Rippen 5' und 5'' in zwei einander entgegengesetzten Richtungen, das heißt nach oben und nach unten gleichförmig abstehend ausgebildet sind.

Infolgedessen ergeben sich jeweils oberhalb und unterhalb des plattenartigen Mittelteils 18, des Trägerteils 1' obere und untere Durchströmungskanäle 12' und 12'', die gleichsam paarweise angeordnet sind.

Die erste Membran 9 wird durch eine Reihe der nach oben abstehenden ersten Rippen 5' abgestützt, während diese Membrane 9 hierbei eine entsprechende Gruppe dieser ersten Durchströmungskanäle 12' abdeckt.

Andererseits wird die zweite Membrane 9' durch eine entsprechende Reihe der nach unten abstehenden, zweiten Rippen 5'' abgestützt und deckt hierbei eine entsprechende zweite Gruppe von zweiten Durchströmungskanälen 12'' ab.

Das in der Fig. 5 lediglich zum Teil dargestellte Membranmodul 20' setzt sich aus aufeinandergestapelten Trägerteilen 1' mit den daran befestigten Membrantaschen 9' zusammen. In der Fig. 5 sind zwar lediglich drei aufeinandergestapelte Trägerteile 1' dargestellt, in der Regel wird jedoch eine wesentlich größere Anzahl solcher Trägerteile 1' zur Bildung des resultierenden Membranmodules 20' verwendet, wobei diese Trägerteile 1' in der aus den Fig. 4 und 5 ersichtlichen Art und Weise aufeinandergestapelt werden.

Wie bereits oben erwähnt, weist dieses Trägerteil 1' in seiner Breitenrichtung jeweils drei aufeinanderfolgende funktionelle Bereiche A, B, C auf, wobei aus Fig. 5 lediglich ein Teilabschnitt des rechten Bereiches C ersichtlich ist. Dieser gemäß Fig. 5 rechte Teilbereich C entspricht dem linken Teilbereich A, das heißt, daß in dem in Fig. 5 nicht gezeigten Endabschnitt des rechten Teilbereiches C wiederum sämtliche Ablaufbohrungen der aufeinandergestapelten Trägerteile 1' fluchtend übereinander liegen, in gleicher Weise wie auf der linken Seite die Zulaufbohrungen 6, so daß wiederum in diesem Endteil des rechten Teilbereiches C ein entsprechender Ablaufkanal gebildet wird, der durch den Stapel der Trägerteile 1' vollständig hindurchgeht. Diese Ablaufbohrung ist wiederum für sämtliche Membrantaschen 11' gemeinsam. In der Fig. 5 ist noch durch die Pfeile Pf₅ und Pf₆ der Strömungsverlauf von dem Innenraum jeweils einer Membrantasche 11' in Richtung zur auf der rechten Seite gemäß Fig. 5 liegenden Ablaufbohrung 15 des Membranmoduls 20' angedeutet.

Die Befestigung der Membranen 9 und 9' jeweils auf der unteren Oberfläche eines Trägerteils 1', genauer gesagt auf der Unterseite jeweils einer unteren Wand 3', erfolgt vorzugsweise mittels Verkleben oder Verschweißen, so daß die bereits oben erwähnten, jeweiligen randseitigen Befestigungsabschnitte 10 und 10' im entsprechenden unteren Oberflächenbereich 8' der unteren Wand 3' des Trägerteils 1' gebildet werden.

Während sich jeweils eine Membrane 9 der Membrantaschen 11' auf den oberen freien Kanten 17' der Rippen 5' abstützt, gelangt die zweite Membrane 9' jeweils auf den unteren freien Kanten der gegenüberliegenden Rippen 5'' zur dichten Anlage.

Ferner ist aus den Fig. 2, 4 und 5 ersichtlich, daß zur gegenseitigen flüssigkeitsdichten Abdichtung der aufeinandergestapelten Trägerteile 1 bzw. 1' O-Ringe 13 vorgesehen sind, die jeweils oberhalb der Zulaufbohrungen 6 bzw. der entsprechenden Ablaufbohrungen in jeweiligen Ausnehmungen 4' innerhalb der verstärkten randseitigen Wandungsabschnitte 4 der Trägerteile 1 bzw. 1' vorgesehen sind.

Darüber hinaus sind in den beiden äußeren, rechten und linken Wandungsabschnitten 4 der Trägerteile 1 bzw. 1' in jeweiligen, dort vorgesehenen Ausnehmungen 19 (vgl. Figuren 1 und 3) noch zusätzliche Abdichtungselemente 14 vorgesehen.

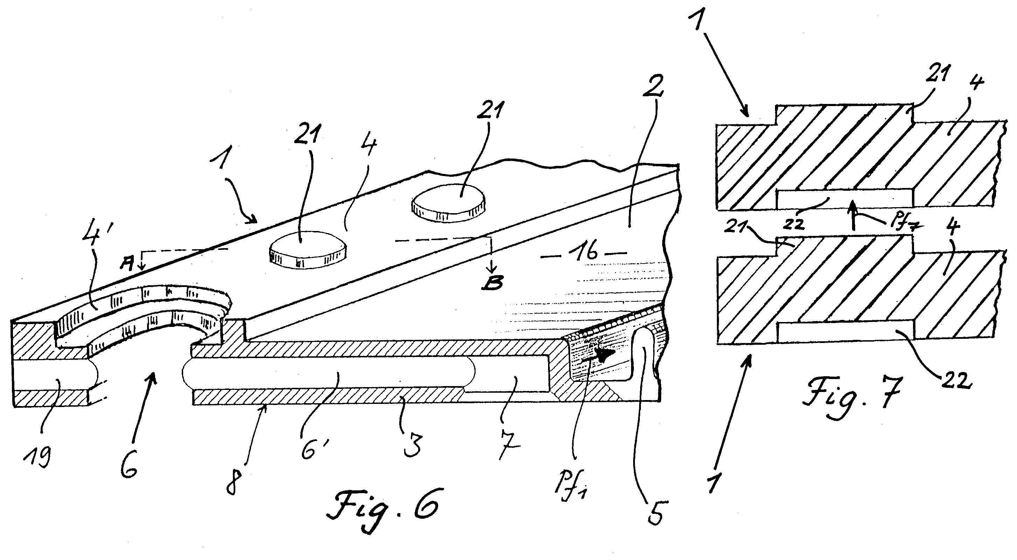

Aus Fig. 6 und 7 ist eine Ausführungsvariante für ein Trägerteil ersichtlich. In diesem Falle weist ein jedes Trägerteil 1 auf seiner oberen Wand 2 eine vorgegebene Anzahl von noppenartigen Vorsprüngen 21 auf, während es auf seiner gegenüberliegenden unteren Wand 3 eine vorgegebene Anzahl von komplementären Ausnehmungen 22 aufweist, wie aus Fig. 7 ersichtlich ist.

In bevorzugter Weise befinden sich diese noppenartigen Vorsprünge 21 und komplementären Ausnehmungen 22 im Bereich des verstärkten randseitigen Wandungsabschnittes 4 einer Tragerplatte 1. Beim Aufeinanderstapeln der Trägerteile 1 zur Bildung des Membranmodules werden die noppenartigen Vorsprünge 21 in die entsprechenden Ausnehmungen 22 eingesteckt, derart, daß sich eine Art von Steckverbindungssystem ergibt, wodurch die aufeinandergestapelten Trägerteile 1 in sicherer Weise gegenseitig befestigt sind.

Die noppenartig ausgebildeten Vorsprünge auf dem verstärkten Wandungsabschnitt 4 eines Trägerteils 1 sind vorzugsweise von runder, scheibenförmiger Gestalt, entsprechend sind die dazugehörigen Ausnehmungen 22 zur Aufnahme der noppenartigen Vorsprünge 21 ausgebildet. Im übrigen können diese Vorsprünge 21 allgemein zapfenförmig ausgebildet sein, beispielsweise könnten sie anstatt rund auch rechteckförmig oder ähnlich ausgestaltet sein.

Je nach geometrischer Form der noppenartigen Vorsprünge 21 sind natürlich auch die Ausnehmungen 22 zur Aufnahme dieser Vorsprünge ausgestaltet.

Fig. 7 zeigt zwei übereinander angeordnete randseitige Wandungsabschnitte 4 in jeweiligen Teil-Schnittansichten gemäß A-B nach Fig. 6 von Trägerplatten 1, wobei ersichtlich ist, daß während des Aufeinanderstapelns von jeweils zwei benachbarten Trägerteilen 1 die entsprechenden auf der einen Oberfläche befindlichen noppenartigen Vorsprünge 21 in die auf der anderen Oberfläche befindlichen Ausnehmungen 22 in Richtung des Pfeiles Pf₇ eingesetzt werden. Dies ergibt eine sichere gegenseitige Fixierung der aufeinandergestapelten Trägerteile 1.

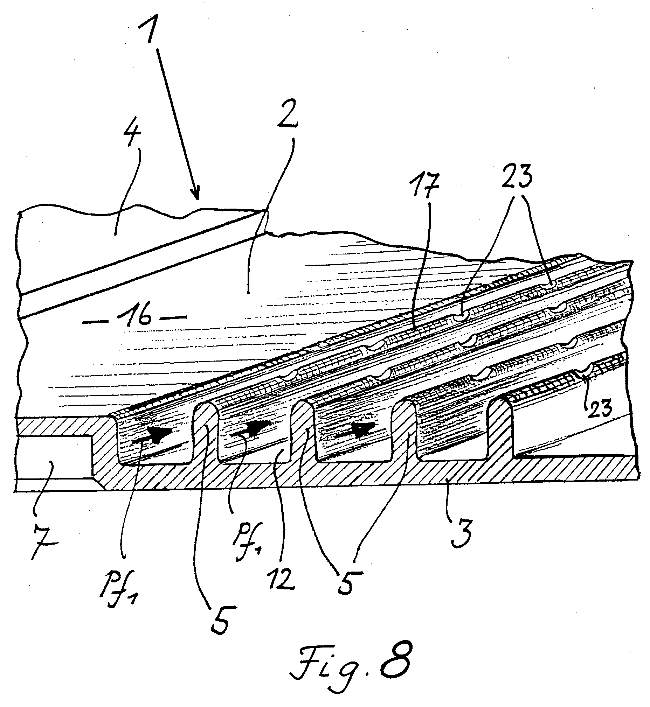

Weiterhin ist aus der Fig. 8 noch ersichtlich, daß die Rippen 5 im Bereich ihrer oberen freien Kanten 17 jeweils mit Kerben 23 versehen sind, wobei derartige Kerben 23 in der Längsrichtung der Rippen 5 in regelmäßigen gegenseitigen Abständen voneinander angeordnet sind.

Im Vorangehenden wurde bereits beispielsweise anhand der Fig. 2 erläutert, daß sich die Membranen 9 der Membrantaschen 11 auf den freien Kanten 17 der Rippen 5 abstützen und hierbei die offenen Seiten sämtlicher Durchströmungskanäle 12 abdecken. Aufgrund der in Fig. 8 dargestellten Ausführungsform mit den Kerben 23 an den oberen freien Kanten der Rippen 5 wird erreicht, daß es zu einer verstärkten Verwirbelung des Gasstromes im Bereich der Membranoberflächen kommt, was wiederum zu einer Erhöhung der Gas-Verweilzeit im Membranbereich führt, mit dem Ergebnis, daß die Effektivität des Stoffaustausch-Systems "gasförmig/flüssig" noch verbessert werden kann.

Die Membranoberflächen liegen somit auf den freien Kanten 17 der Rippen 5 nicht durchgehend auf, sondern diese Auflageflächen sind praktisch durch die Kerben 23 unterbrochen, wodurch der erwünschte Verwirbelungseffekt erzielt wird.

Schließlich sind, wie in den Zeichnungen im einzelnen nicht dargestellt ist, Deckplatten und Bodenplatten vorgesehen, mit denen jeweils das aus den aufeinandergestapelten Trägerteilen 1 bzw. 1' gebildete Membranmodul 20 bzw. 20' abgeschlossen ist, wobei in diese Deckplatten und Bodenplatten jeweils Zu- und Ablaufkanäle eingeformt sind, die einerseits mit den Zulaufbohrungen 6 und andererseits mit den Ablaufbohrungen in Verbindung stehen.

Darüber hinaus sind in den jeweiligen vorderen und hinteren Abschnitten der Membranmodule 20 bzw. 20' in Ebenen, die man sich parallel zu der Zeichenebene verlaufend vorzustellen hat, vordere und hintere Stege oder Leisten angeordnet, an welchen die entsprechenden Abschnitte der Membrane 9 und 9' befestigt werden, wobei derartige Stege oder Leisten ebenfalls einen Bestandteil des Trägerteils 1 bzw. 1' bilden können oder aber auf diesem Trägerteil 1 aufgeklebt oder aufgeklemmt sein können.

Derartige, den Befestigungsabschnitten 10 bzw. 10' entsprechende Befestigungsbereiche für die Membrane 9 bzw. 9' schließen gleichsam die vorderen und hinteren Abschnitte der Membrantaschen 11 bzw. 11' ab.

Wie bereits oben erwähnt, bestehen die Trägerteile 1 bzw. 1' der Membranmodule 20 bzw. 20' in bevorzugter Weise aus vorgefertigten, einstückigen Spritzgußteilen aus Kunststoff, so daß zur Bildung der resultierenden Membranmodule außer diesen Trägerteilen lediglich noch die Membranmaterialien sowie die O-Ringe 13 und gegebenenfalls noch die zusätzlichen Abdichtungselemente 14 erforderlich sind.

Die im Vorangehenden beschriebene Vorrichtung läßt sich im übrigen nicht nur zur Reinigung von Gasen einsetzen, sondern auch zur Reinigung von Flüssigkeiten.

## Patentansprüche

1. Vorrichtung zur Entfernung von gasförmigen Stoffen aus einem Gasstrom (Flüssigkeitsstrom), bestehend aus einem Membranmodul mit einer Vielzahl von Membrantaschen, deren wenigstens eine Membranwandung aus einem gasdurchlässigen, flüssigkeitsdichten Material besteht, wobei die Membrantaschen im wesentlichen parallel zueinander und parallel zur Strömungsrichtung des Gasstroms (Flüssigkeitsstromes) angeordnet, zur Aufnahme einer flüssigen Reaktionsmischung oder einer Suspension von Mikroorganismen eingerichtet sowie über eine Zulauföffnung beschickbar und eine Ablauföffnung entleerbar sind, und wobei ferner jeweils zwischen den in Axialrichtung des Membranmoduls aufeinanderfolgenden Membrantaschen durch eine vorgegebene Anzahl von Abstandselementen Durchströmungskanäle für den Gasstrom (Flüssigkeitsstrom) gebildet sind,
**dadurch gekennzeichnet,**
daß für jede Membrantasche (11; 11') ein im wesentlichen plattenartig ausgebildetes, vorgefertiges Trägerteil (1, 1') vorgesehen ist, an dessen eine Seite bzw. (untere) Oberfläche (8, 8') angrenzend jeweils eine Membrantasche (11, 11') mit Flüssigkeitszulauf- und -ablauföffnungen (7, 15) angeordnet und mit dieser Seite bzw. Oberfläche (8, 8') randseitig abdichtend verbunden ist, während zumindest auf der gegenüberliegenden Seite bzw. (oberen) Oberfläche (16, 16') des Trägerteils (1, 1') eine Reihe von nebeneinander angeordneten, parallelen Durchströmungskanälen (12, 12') für Gasstrom (Flüssigkeitsstrom) ausgebildet ist, deren Begrenzungswände durch auf dieser Seite bzw. Oberfläche (16, 16') des Trägerteils (1, 1') im Bereich (B) angeformte, parallele Rippen (5, 5') als Abstandselemente gebildet sind; daß in den an den Bereich (B) der Rippen (5) angrenzenden beiden Seitenbereichen (A, C) des Trägerteils (1, 1') jeweils die für alle Membrantaschen (11, 11') gemeinsamen Zulauf- und Ablaufbohrungen (6) ausgeformt sind; daß die Trägerteile (1, 1') in der Weise übereinander gestapelt sind, daß die jeweils wenigstens eine Membran (9) der Membrantaschen (11, 11') sich auf den freien Kanten (17, 17') der Rippen (5, 5') an einem benachbarten Trägerteil (1, 1') abstützt und hierbei die offenen Seiten sämtlicher Durchströmungskanäle (12, 12') abdeckt, und daß die in jedem Trägerteil (1, 1') ausgesparten Zulauf- und Ablaufbohrungen (6) fluchtend übereinanderliegen und entsprechende Kanäle bilden, die durch den Stapel der Trägerteile (1, 11') vollständig hindurchgehen.

2. Vorrichtung nach Anspruch 1,
**dadurch gekennzeichnet,**
daß eine jede Membrantasche (11) einerseits durch eine Membran (9) und andererseits durch eine untere, ebene Oberfläche (8) eines Trägerteils (1) begrenzt ist, an welcher die Membran (9) randseitig befestigt ist.

3. Vorrichtung nach Anspruch 1 oder 2,
**dadurch gekennzeichnet,**
daß jeweilige randseitige Befestigungsabschnitte (10, 10') einer Membran (9, 9') an einer unteren Oberfläche (8, 8') des Trägerteils (1, 1') vor der Position einer Zulauföffnung (7, 7') bzw. hinter der Position einer Ablauföffnung (7') angeordnet sind.

4. Vorrichtung nach Anspruch 1,
**dadurch gekennzeichnet,**
daß jede Membrantasche (11') einerseits durch eine erste Membran (9) und andererseits durch eine zweite Membran (9') begrenzt ist, wobei die ersten und zweiten Membranen (9, 9') jeweils randseitig an einem unteren, ebenen Oberflächenbereich (8') eines Trägerteils (1') befestigt sind.

5. Vorrichtung nach Anspruch 4,
**dadurch gekennzeichnet,**
daß die randseitigen Befestigungsabschnitte (10) der ersten Membrane (9) im unteren Oberflächenbereich (8') der Wandung (3') des Trägerteils (1') jeweils vor einer Zulauföffnung (7') bzw. hinter einer Ablauföffnung (15) der Membrantasche (11') und daß die randseitigen Befestigungsabschnitte (10') der zweiten Membrane (9') im unteren Oberflächenbereich (8') der Wandung (3') des Trägerteiles (1') jeweils hinter der Zulauföffnung (7') bzw. vor der Ablauföffnung (15) der Membrantasche (11') angeordnet sind.

6. Vorrichtung nach Anspruch 4 oder 5,
**dadurch gekennzeichnet,**
daß in dem die Rippen aufweisenden Bereich (B) des Trägerteils (1') ein System von parallelen Doppelrippen (5', 5'') vorgesehen ist, wobei von einem im Bereich (B) vorhandenen plattenartigen Mittelteil (18) des Trägerteils (1') ausgehend die ersten und zweiten Rippen (5', 5'') in zwei einander entgegengesetzten Richtungen, d.h. nach oben und nach unten gleichförmig abstehend, ausgebildet sind.

7. Vorrichtung nach Anspruch 6,
**dadurch gekennzeichnet,**
daß die erste Membrane (9) durch die Reihe der nach oben abstehenden, ersten Rippen (5') abgestützt wird und hierbei eine entsprechende Gruppe von ersten Durchströmungskanälen (12') abdeckt, und daß die zweite Membrane (9') durch eine entsprechende Reihe der nach unten abstehenden, zweiten Rippen (5'') abgestützt wird und hierbei eine entsprechende zweite Gruppe von zweiten Durchströmungskanälen (12'') abdeckt.

8. Vorrichtung nach einem der vorhergehenden Ansprüche,
**dadurch gekennzeichnet,**
daß zur flüssigkeitsdichten Abdichtung der aufeinanderfolgenden Trägerteile (1, 1') in dem Stapel O-Ringe (13) vorgesehen sind, die jeweils oberhalb der Zulaufbohrungen (6) bzw. der Ablaufbohrungen in entsprechenden Ausnehmungen (4') innerhalb von verstärkten randseitigen Wandungsabschnitten (4) des Trägerteils (1, 1') eingesetzt sind, wobei ggf. noch zusätzliche Abdichtungselemente (14) in diesen Wandungsabschnitten (4) vorgesehen sind.

9. Vorrichtung nach einem der vorhergehenden Ansprüche,
**dadurch gekennzeichnet,**
daß das aus den aufeinandergestapelten Trägerteilen (1, 1') gebildete Membranmodul (20, 20') mittels einer Deckplatte und einer Bodenplatte abgeschlossen ist, in welche Zu- und Ablaufkanäle eingeformt sind, die einerseits mit den Zulaufbohrungen (6) und andererseits mit den Ablaufbohrungen in Verbindung stehen.

10. Vorrichtung nach einem der vorhergehenden Ansprüche,
**dadurch gekennzeichnet,**
daß jedes Trägerteil (1, 1') auf seiner oberen Wand (2) eine vorgegebene Anzahl von noppenartigen Vorsprüngen (21) und auf seiner unteren Wand (3) eine vorgegebene Anzahl von komplementären Ausnehmungen (22) aufweist, derart, daß in dem durch die aufeinandergestapelten Trägerteile (1, 1') gebildeten Stapel die noppenartigen Vorsprünge (21) und die Ausnehmungen (22) ineinander einsteckbar sind.

11. Vorrichtung nach Anspruch 10,
**dadurch gekennzeichnet,**
daß die noppenartigen Vorsprünge (21) und die komplementären Ausnehmungen (22) jeweils in den Bereichen der randseitigen verstärkten Wandungsabschnitte (4) der Trägerteile (1, 1') vorgesehen sind.

12. Vorrichtung nach Anspruch 10 oder 11,
**dadurch gekennzeichnet,**
daß die noppenartigen Vorsprünge (21) von einer im wesentlichen runden, scheibenförmigen bzw. zapfenförmigen Gestalt sind, während die komplementären Ausnehmungen (22) in entsprechender Weise ausgeformt sind.

13. Vorrichtung nach einem der vorhergehenden Ansprüche,
**dadurch gekennzeichnet,**
daß die freien Kanten (17, 17') der Rippen (5, 5', 5'') mit Kerben (23) versehen sind, die in der Längsrichtung der Rippen mit regelmäßigen gegenseitigen Abständen voneinander angeordnet sind.

14. Vorrichtung nach einem der vorhergehenden Ansprüche,
**dadurch gekennzeichnet,**
daß die Trägerteile (1, 1') durch einstückige Kunststoff-Spritzgußteile gebildet sind.

15. Verfahren zur Entfernung von gasförmigen Stoffen aus einem Gasstrom (Flüssigkeitsstrom) durch Vorbeiführen des Gasstromes an einer flüssigkeitsdichten Membran, die einen Raum begrenzt, der eine flüssige Reaktionsmischung, insbesondere eine wässrige Suspension von Mikroorganismen enthält,
**dadurch gekennzeichnet,**
daß die Membran eine erste hydrophobe Schicht aufweist, die eine mikroporöse, gereckte PTFE-Folie ist, und eine zweite hydrophile Schicht, die mit der ersten Schicht verbunden ist, und die eine Wasserdampfdurchlässigkeit von über 1000 g pro m² und Tag besitzt.

16. Verfahren nach Anspruch 15,
**dadurch gekennzeichnet,**
daß die hydrophobe Schicht und die hydrophile Schicht jeweils eine Dicke von 5 - 1500 µ, vorzugsweise 20 - 100 µ aufweisen.

17. Verfahren nach Anspruch 15 oder 16,
**dadurch gekennzeichnet,**
daß die hydrophile Schicht eine Beschichtung aus Polyurethan ist.

18. Verfahren nach Anspruch 17,
**dadurch gekennzeichnet,**
daß die Beschichtung in einer Menge von 5 - 15 g pro m² aufgebracht sind.

19. Verfahren nach Anspruch 15 oder 16,
**dadurch gekennzeichnet,**
daß die hydrophile Schicht Polyether-Polyurethan ist.

20. Verfahren nach Anspruch 15 oder 16,
**dadurch gekennzeichnet,**
daß die hydrophile Schicht eine Membran aus Perfluorsulfonsäure ist.

21. Verfahren nach einem der Ansprüche 15 - 20,
**dadurch gekennzeichnet,**
daß die hydrophobe Schicht und die hydrophile Schicht ein Laminat bilden.

22. Verfahren nach einem der Ansprüche 15 - 21,
**dadurch gekennzeichnet,**
daß die Membran mit einem luftdurchlässigen Trägermaterial verbunden ist, das vorzugsweise aus Vlies, Lochfolie oder Textil besteht.

23. Verfahren nach Anspruch 22,
**dadurch gekennzeichnet,**
daß das Trägermaterial zwischen zwei Membranen eingeschlossen ist.

24. Verfahren nach Anspruch 23,
**dadurch gekennzeichnet,**
daß die hydrophile Schicht der Membran außen liegt.
